# EUROPÄISCHE PATENTSCHRIFT

(11) **EP 1 547 418 B1**
(45) Veröffentlichungstag und Bekanntmachung des Hinweises auf die Patenterteilung: **27.02.2008**
(21) Anmeldenummer: 02779443.7
(22) Anmeldetag: 30.09.2002
(51) Int. Cl.: H04Q 7/38

(54) **Überprüfen der Einbuchungsberechtigung durch eine Zugangs-Berechtigungsmarke**
Verifying check-in authentication by using an access authentification token
Verification d'une habilitation d'enregistrement par jeton d'habilitation d'acces

(43) Veröffentlichungstag der Anmeldung: 29.06.2005
(73) Patentinhaber: Nokia Siemens Networks GmbH & Co. KG, 81541 München (DE)
(72) Erfinder: CHEN, Tianwei, Eugene, OR 97401 (US); FAN, Changpeng, 10557 Berlin (DE); SCHÄFER, Günter, 10551 Berlin (DE)
(86) Internationale Anmeldenummer: PCT/EP2002/010962
(87) Internationale Veröffentlichungsnummer: WO 2004/034717

(56) Entgegenhaltungen:
- WO-A-01/22685
- SUBRAMANYAM V ET AL: "Security in mobile systems" RELIABLE DISTRIBUTED SYSTEMS, 1998. PROCEEDINGS. SEVENTEENTH IEEE SYMPOSIUM ON WEST LAFAYETTE, IN, USA 20-23 OCT. 1998, LOS ALAMITOS, CA, USA,IEEE COMPUT. SOC, US, 20. Oktober 1998 (1998-10-20), Seiten 407-412, XP010319125 ISBN: 0-8186-9218-9
- HUNG-YU LIN ET AL: "Authentication in wireless communications" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA,IEEE, 29. November 1993 (1993-11-29), Seiten 550-554, XP010109722 ISBN: 0-7803-0917-0
- MOLVA R ET AL: "AUTHENTICATION OF MOBILE USERS" IEEE NETWORK, IEEE INC. NEW YORK, US, Bd. 8, Nr. 2, 1. März 1994 (1994-03-01), Seiten 26-34, XP000515077 ISSN: 0890-8044

## Beschreibung

SUBRAMANYAM V ET AL: "Security in mobile Systems" Reliable Distributed Systems, 1998. Proceedings. Seventeenth IEEE Symposium on West Lafayette, IN, USA 20-23 Oct. 1998, Los Alamitos, CA, USA, IEEE Comput. Soc, US, 20. Oktober 1998 (1998-10-20), Seiten 407-412, XP010319125 ISBN: 0-8186-9218-9 diskutiert Anforderungen für die Mobilität in einem Netzwerk und die Ausweitung existierender Sicherheitsschemen. Für Nutzer kann es wichtig sein, einen kontinuierlichen Zugang zu Informationen in einen Netzwerk zu haben, sogar, wenn sie mobil sind, wie z. B. ein Arzt, der die Gesundheit eines Patienten konstant überwachen muss. Die Kommunikation bei solchen Fällen wird üblicherweise über kabellose Verbindungen durchgeführt und ist schwierig für die Garantierung der Sicherheit beim Austausch von Nachrichten. Übliche Ziele für eine sichere EDV (Computing) waren bislang das Archivieren der Vertrauenswürdigkeit, der Integrität, der Erreichbarkeit, der Legitimierung und die Rechenschaft.

Die Erfindung betrifft ein Verfahren und eine Vorrichtung zum Überprüfen der Einbuchungsberechtigung vor dem Start von Authentifizierungs- und Autorisierungsprozessen aufgrund einer Einbuchungsanfrage eines Mobilfunkendgerätes an mindestens eine Zugangseinrichtung für einen Intra-Domänen-handover in einem mobilen Kommunikationsnetz.

QoS-Mechanismen (QoS = Qualität des Dienstes) haben den Zweck, Dienst-Charakteristiken, wie die Ende-zu-Ende-Laufzeit etc. in Netzwerken, die die mobile Internet-Kommunikation unterstützen, zu garantieren. In diesen Netzwerken besteht eine Bedrohung für diese Mechanismen durch sogenannte Verweigerung-von-Diensten - Angriffen (Denial of Service (DoS)), die zum Ziel haben, die Verfügbarkeit von Diensten bei legitimierten Benutzern zu reduzieren. Eine Bedrohung liegt darin, dass QoS-Signalisierüngsmechanismen dazu benutzt werden, mobile Knoten für Anfragen an ein Netzwerk zu aktivieren, was eine Ressourcen-Reservierung bedeutet. Wenn das Netzwerk nicht effizient die "Glaubwürdigkeit" von QoS-Anfragen überprüfen kann, z. B. durch das Abfragen der Herkunft und der Autorisation einer Anfrage von einem mobilen Knoten, kann die Leistungsfähigkeit des Netzwerkes mit falschen QoS-Anfragen reduziert werden. Ein Mobilfunkendgerät verlässt z. B. sein Heimatnetzwerk und wechselt in ein Netzwerk mit HMIPv6 Anschluss und einer AAA-Architektur. Dabei wird angenommen, dass zwischen dem Mobilitäts-Ankerpunkt (MAP) und jedem Zugangs-Router (AR), zwischen dem lokalen AAA-Server (AAAL) und jedem Zugangs-Router (AR), zwischen dem MAP und dem AAAL und zwischen einem Zugangs-Router und den anderen Zugangs-Routern immer eine Sicherheits-Assoziation (Sicherheitszusammenhang = SA) besteht. Nachdem sich ein Mobilfunkendgerät erfolgreich registriert hat, werden seine Authentifikations- und Autorisationsinformationen (AA) in einem lokalen AAA-Server (AAAL) gespeichert und seine Identität ist beim MAP und bei dem Zugangs-Router (AR), bei dem das Mobilfunkendgerät sich zuerst registriert hat, bekannt. Danach kann das Mobilfunkendgerät sich zwischen den Einzugsbereichen der Zugangs-Router (AR) ohne einer Unterbrechung bei einer Kommunikation bewegen. Um den Intra-Domänen-handover zu optimieren, muss die Wartezeit für die Registrierung bei den einzelnen Zugangs-Routern so weit wie möglich minimiert werden.
Generell verhindern oder blockieren DoS-Angriffe den normalen Gebrauch oder die Verwaltung von Kommunikationseinrichtungen (oder anderen Diensten). Verweigerung-von-Diensten - Angriffe (Denial of Service = DoS) haben meist ein spezielles Ziel. So können z. B. DoS-Angriffe den Zusammenbruch oder das Abschalten des gesamten Netzwerkes oder die Herabsetzung der Leistung durch Überlasten des Netzwerkes mittels einer hohen Anzahl von gesendeten Falsch-Nachrichten bewirken. Alle Mobilfunkendgeräte in einem Zugangsnetzwerk können QoS-Anfragen zu allen Knoten entlang des Kommunikationspfades zum Reservieren von Ressourcen senden. So können auch Angreifer QoS-Anfragen im Zugangsnetzwerk senden. Aus diesem Grund muss eine Zugangseinrichtung, wie etwa ein Zugangs-Router die "Glaubwürdigkeit" einer QoS-Anfrage von einem Mobilfunkendgerät überprüfen, bevor es die Anfrage weiter verarbeitet. Wenn eine Zugangseinrichtung.dies mit Hilfe des lokalen AAA-Server vor dem Start des Reservierungsprozesses macht, gibt es eine signifikante Wartezeit für den Wieder-Registrierungsprozess. Wenn ein Mobilfunkendgerät von dem Einzugsbereich eines Zugangs-Routers in den Einzugsbereich eines anderen Zugangs-Routers im Zugangsnetzwerk (Intra-Domänen-handover) wechselt, sollen keine Unterbrechungen zwischen Mobilfunkendgerät und Zugangsnetzwerk entstehen. Während das Mobilfunkendgerät die Verbindung mit dem ersten Zugangs-Router hält, initiiert es einen neuen Registrierungsprozess mit einem weiteren Zugangs-Router durch das Senden von Verbindungs-Aktualisierungs-Nachrichten (binding update messages). Wenn nicht vorher überprüft wird, ob das Mobilfunkendgerät ein registrierter Nutzer im Zugangsnetzwerk ist, können Angreifer das Zugangsnetzwerk, damit z. B. die Rechenkapazität durch Anfragen betreffend die Authentifikation und Autorisation verschwenden oder Ressourcen reservieren für falsche Anfragen usw., belasten.

Aufgabe der vorliegenden Erfindung ist es deshalb, durch einen wirksamen Schutz vor falschen Anfragen die Leistungsfähigkeit des Kommunikationsnetzes optimiert zu gewährleisten.

Die Aufgabe wird erfindungsgemäß jeweils durch die Gegenstände der unabhängigen Patentansprüche bezüglich des Verfahrens und der Vorrichtung gelöst. Ein Kern der Erfindung ist, dass bei einem Intra-Domänen-handover vor dem Beginn von Verbindungs-Aktualisierungs- und Wieder-Authentifikations-und Wieder-Autorisationsprozessen (AAA-Prozesse) eine Prüfung der Einbuchungsberechtigung mit einer Berechtigungsmarke stattfindet, um DoS-Angriffen vorzubeugen. Die Vorteile dieser Methode sind eine geringe Wartezeit bei Wieder-Registrierungsprozessen und der wirksame Schutz vor DoS-Angriffen. Mit dieser Methode kann das Füllen (Der DoS-Angriff versucht den Speicher des angegriffenen Systems zu füllen und damit zu erreichen, dass das System keine legitimen Anfragen mehr entgegennehmen kann.) des Speichers des Zugangs-Routers aufgrund eines DoS-Angriffes, der Leistungsabfall der Signalisierungs-Kapazität im Zugangsnetzwerk durch falsche Anfragen und das nicht berechtigte Belegen von Ressourcen im lokalen AAA-Server durch falsche Anfragen vermieden werden. Vorteilhafte Ausführungsformen sind in den auf diesen Anspruch rückbezogenen Unteransprüchen angegeben. Die Reduzierung der Risiken durch wiederholt gesendete Berechtigungsmarken (= Token), wie z. B. ein Cookie kann aufgrund eines eng begrenzten Gültigkeitsbereichs, indem die Berechtigungsmarke akzeptiert wird, erreicht werden.

Die Erfindung wird anhand eines in der Figur dargestellten Ausführungsbeispiels näher erläutert. Dabei zeigt
- Figur 1: wie die erste Berechtigungsmarke (=Token) zum Mobilfunkendgerät gesandt wird,
- Figur 2: wie die vorher generierte Berechtigungsmarke ohne Begrenzung des Gültigkeitsbereich und ohne Anzeige für die Verwendung an eine weitere Zugangseinrichtung gesandt wird,
- Figur 3: wie die vorher generierte Berechtigungsmarke ohne einen Indikator für die Verwendung in einem begrenzten Gültigkeitsbereich übermittelt wird,
- Figur 4: wie die vorher generierte Berechtigungsmarke mit einem Indikator für die Verwendung in einem begrenzten Gültigkeitsbereich übermittelt wird,
- Figur 5: wie eine Berechtigungsmarke an ein Mobilfunkendgerät nach einem Intra-Domänen-handover gesandt wird,
- Figur 6: ein Schema für eine Vorrichtung zum Versenden und Überprüfen von Berechtigungsmarken.

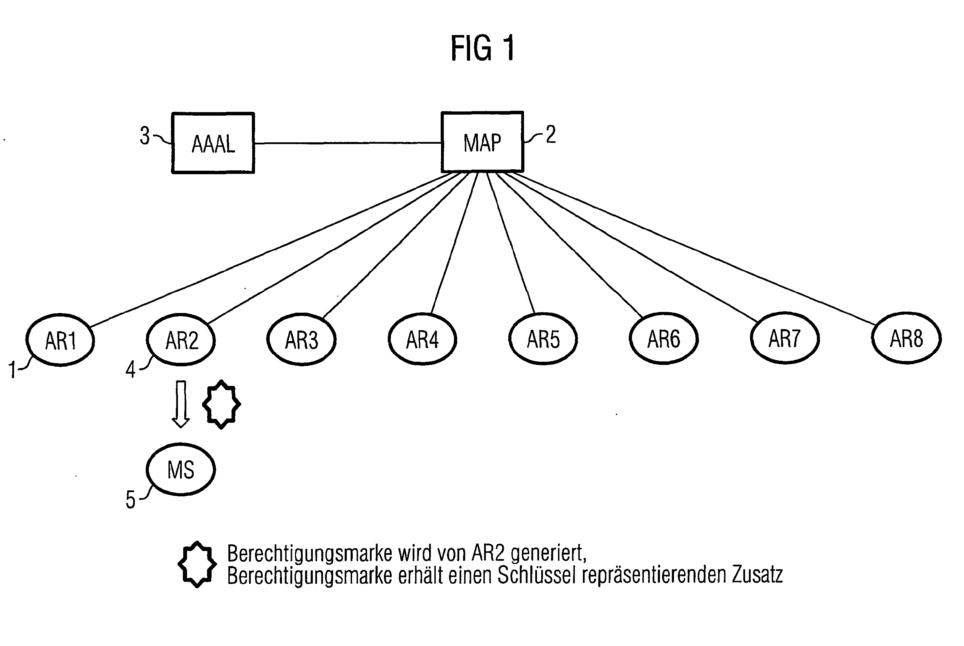

Figur 1 zeigt, wie das Mobilfunkendgerät 5 eine erste Registrierungsanfrage an einen Zugangs-Router 4 beim Einschalten oder beim ersten Anmelden im Zugangsnetzwerk sendet. Nachdem der lokale AAA-Server die positiven Authentifikations- und Autorisationsinformationen vom Heimat-AAA-Server erhalten hat, informiert er den Mobilitäts-Ankerpunkt (MAP) 2 über die erfolgreiche Authentisierungs-und Autorisierungsprüfung. Danach sendet der Mobilitäts-Ankerpunkt (MAP) 2 den Sitzungsschlüssel (session key), der vom Heimat-AAA-Server generiert und mit den Authentisierungs-- und Autorisierungsinformationen weitergeleitet wurde, zu dem Zugangs-Router 4, damit der Zugangs-Router eine Sicherheits-Assoziation mit dem Mobilfunkendgerät 5 einrichten kann. Der Zugangs-Router 4 erstellt eine Berechtigungsmarke, verschlüsselt sie mit dem Sitzungsschlüssel und sendet sie zum Mobilfunkendgerät 5. Das Mobilfunkendgerät 5 erhält den Sitzungsschlüssel sicher mit Hilfe einer langfristigen Sicherheits-Assoziation vom Heimat-AAA-Server.
Berechtigungsmarken werden hier immer von einem Zugangs-Router erstellt. Die erste Berechtigungsmarke erhält das Mobilfunkendgerät 5 von demjenigen Zugangs-Router bei dem sich das Mobilfunkendgerät 5 anmeldet oder einen Intra-Domänen-handover durchführt, d. h. nach der erfolgreichen Registrierung wird die mit dem Sitzungsschlüssel verschlüsselte Berechtigungsmarke zwischen dem Mobilfunkendgerät 5 und allen Zugangs-Routern des Zugangsnetzwerkes etabliert und von einem Zugangs-Router 4 an das Mobilfunkendgerät 5 mit der Verbindungs-Aktualisierungs-Nachricht übermittelt. Jeder Zugangs-Router 4 hat mindestens eine Vertrauensliste 7. In einer Vertrauensliste 7 (Trusted List) werden Informationen über die Zugangs-Router 1, 6 gespeichert, deren Berechtigungsmarken akzeptiert werden und in einer anderen Vertrauensliste 7 (Trusting List) werden Informationen über die Zugangs-Router 1,6 gespeichert, die die Berechtigungsmarken des erzeugenden Zugangs Router 4 akzeptieren. In einer dritten Vertrauensliste 7 werden die bereits verwendeten Berechtigungsmarken gespeichert. Hier werden alle Berechtigungsmarken gespeichert, die bereits einmal von einem Mobilfunkendgerät erfolgreich verwendet wurden. Auf diese Weise wird erreicht, dass eine. Berechtigungsmarke nach einer einmaligen Verwendung "entwertet" ist und nicht wiederholt verwendet werden kann. Die beiden anderen Vertrauenslisten dienen dem Zweck, dass nicht jede verwendete Berechtigungsmarke in jedem Zugangs-Router 1, 4, 6 des gesamten Zugangsnetzes gespeichert werden muss, sondern lediglich in den Zugangs-Routern 1, 4, 6, die in den durch die beiden Vertrauenslisten (Trusted List und Trusting List) realisierten Gültigkeitsbereichen liegen. Ohne die Beschränkung des Gültigkeitsbereiches würde das Verfahren nicht für große Zugangsnetze skalieren. Es akzeptiert nur Berechtigungsmarken, die von den Zugangs-Routern 4 erstellt wurden, die in seiner Vertrauensliste stehen. In einer weiteren Vertrauensliste 7 sind die Zugangs-Router enthalten, die die erstellten Berechtigungsmarken von diesem Zugangs-Router 4 akzeptieren. Um die Sicherheit zu erhöhen werden von einem Zugangs-Router 4 die Berechtigungsmarken seiner Nachbar-Zugangs-Router in eine Vertrauensliste gespeichert. Damit wird ein begrenzter Gültigkeitsbereich für die Akzeptanz einer Berechtigungsmarke erzeugt, da ein Zugangs-Router 4 nur seine selbst-erzeugten Berechtigungsmarken und die, die von einem Nachbar-Zugangs-Router 6 erstellt wurden, akzeptiert.
Wenn ein Mobilfunkendgerät 5 einen Intra-Domänen-handover durchführen möchte, fügt es (5) die Berechtigungsmarke der Wieder-Registrierungsanfrage hinzu und sendet es (5) als Text zu dem neuen Zugangs-Router 6. Der neue Zugangs-Router 6 führt drei Aktionen zum Überprüfen der Berechtigungsmarke durch:
- Überprüfung der Gültigkeitsdauer für den Ablaufzeitpunkt der Berechtigungsmarke;
- Überprüfung der Identität des Zugangs-Routers, der die Berechtigungsmarke erstellt hat, in einer Vertrauensliste 7;
- Nach Überprüfung der o. g. Punkte wird ein Zufallszahl-Zusatz (key-hashed digest) mit den Berechtigungsmarken-Informationen unter Verwendung des Berechtigungsmarken-Schlüssels berechnet und mit dem Zufallszahl-Zusatz, der in der Berechtigungsmarke bereits vorhanden ist, verglichen.

Wenn die Überprüfung der Berechtigungsmarke erfolgreich ist, wird der Verbindungs-Aktualisierungs- und Wieder-Autorisationsprozess gestartet. Der neue Zugangs-Router 6 wird die Wieder-Registrierungsanfrage authentifizieren, wenn er den Sitzungsschlüssel, der in der Wieder-Registrierungsanfrage (BU ACK - Nachricht) enthalten ist, vom Mobilitäts-Ankerpunkt (MAP) 2 erhält. Wenn die Verifikation fehlschlägt wird der Zugangs-Router 6 die Wieder-Registrierungsanfrage nicht weiter bearbeiten. Hat das Mobilfunkendgerät 5 nach einiger Zeit noch keine Antwort über die Wieder-Registrierung vom Zugangs-Router 6 erhalten, muss das Mobilfunkendgerät 5 einen Autorisations- und Authentifikationsprozess über den lokalen AAA-Server 3 und den Heimat-AAA-Server beginnen, so wie bei einem Intra-Domänen-handover oder beim Einschalten des Gerätes 5. Dadurch kann es 5 allerdings den optimierten handover-Prozess nicht nutzen.

Vom Zugangs-Router 6 wird eine neue Berechtigungsmarke mit dem Sitzungsschlüssel erstellt und dem Mobilfunkendgerat 5 für den nächsten Intra-Domänen-handover zugesandt, falls der Wieder-Authentifikationsprozess nicht fehlschlug. Die alte Berechtigungsmarke kann nicht weiter verwendet werden. Nach der Verifizierung der Berechtigungsmarke unterrichtet der Zugangs-Router 6 den Zugangs-Router 4, der die Berechtigungsmarke erstellt hatte, über den Gebrauch der Berechtigungsmarke. Der Zugangs-Router 4, der die Berechtigungsmarke erstellt hatte, informiert alle Zugangs-Router 1, 6 in seinen Vertrauenslisten 7, außer dem Zugangs-Router 6, der die Berechtigungsmarke verwendet hat, um eine zweite Verwendung der Berechtigungsmarke zu verhindern. Erreicht die Berechtigungsmarke seinen Ablaufzeitpunkt für die Gültigkeit der Berechtigungsmarke wird die Berechtigungsmarke aus den Vertrauenslisten 7 der Zugangs-Router 1, 4, 6 gelöscht. Eine Berechtigungsmarke enthält die Berechtigungsmarke-Informationen und den Zufallszahl-Zusatz (hash code). Die Berechtigungsmarke-Informationen beinhalten:
- Die Identität des Mobilfunkendgerätes 5: die einmalige Identifizierung des Mobilfunkendgerätes 5 im Zugangsnetzwerk; das kann eine einmalige Identifizierung sein, die ein Mobilfunkendgerät 5 nach seiner ersten Registrierung erhält;
- Die Identität des Zugangs-Routers, der die Berechtigungsmarke erstellt hat: Die einmalige (= nur einmal verwendete, eindeutige) Zugangs-Router Identifikation kann dessen IP-Adresse oder eine andere eindeutige Identifizierungsmöglichkeit im Zugangsnetzwerk sein.
- Die Erzeugungszeit für die Erstellung der Berechtigungsmarke wird benutzt um die Gültigkeitsdauer der Berechtigungsmarke zu begrenzen.
- Eine Zufallszahl: Diese wird benutzt, um zwei Berechtigungsmarken, welche zur gleichen Zeit erstellt wurden zu differenzieren.

Eine Zufallszahl-Zusatz-Nachricht ist ein Auszug aus den Berechtigungsmarke-Informationen und dem Berechtigungsmarke-Schlüssel. Die Berechnung des Zufallszahl-Zusatzes kann entweder durch die Funktion HMAC-MD5 oder HMAC-SHA1 geschehen. Der Berechtigungsmarke-Schlüssel wird vom Mobilitäts-Ankerpunkt (MAP) 2 zu jedem Zugangs-Router verteilt und periodisch aktualisiert.

Eine Berechtigungsmarke sieht also wie folgt aus:
Berechtigungsmarke: = Berechtigungsmarke-Informationen, Berechtigungsmarke-Zufallszahl-Zusatz
Berechtigungsmarke-Informationen := ( Identität des Mobilfunkendgerät, Identität des erzeugenden Zugangs-Routers, Erzeugungszeitpunkt, Zufallszahl)
Berechtigungsmarke-Zufallszahl-Zusatz:= HMAC (Berechtigungsmarke-Schlüssel, Berechtigungsmarke-Informationen)

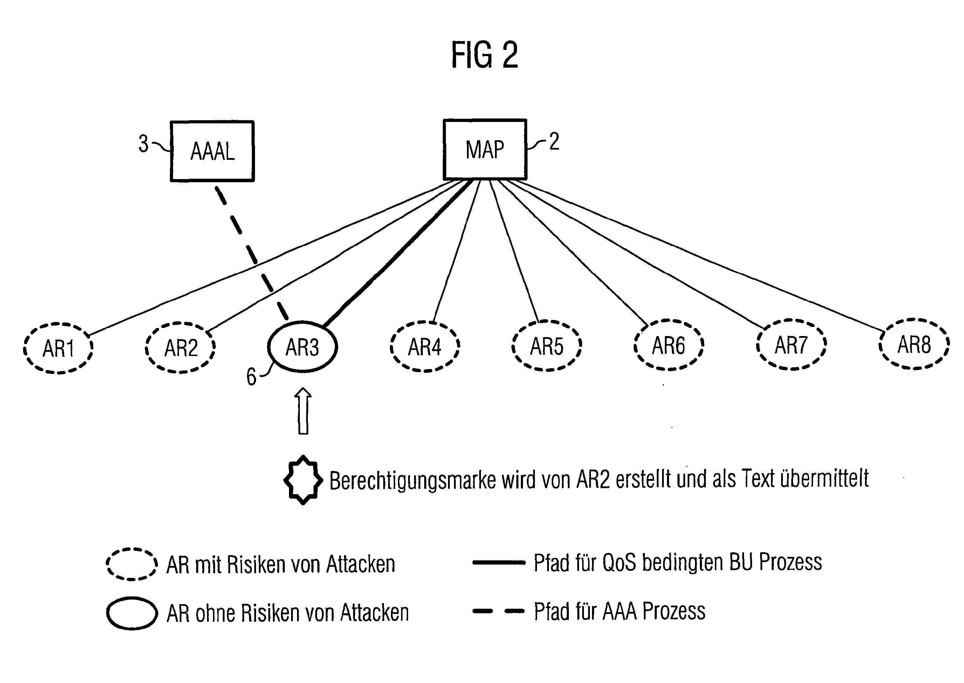

Figur 2 zeigt den Fall, dass der Gültigkeitsbereich für eine erstellte Berechtigungsmarke das gesamte Zugangsnetzwerk ist. Wird eine Berechtigungsmarke an einen Zugangs-Router 6 zur ersten Verwendung gesandt, ist nur er (6) sicher vor DoS-Angriffen, da er (6) der einzige ist, der weiß, dass die Berechtigungsmarke verwendet wurde und nur er (6) kann damit eine zweite Verwendung der Berechtigungsmarke verhindern. Andere Zugangs-Router 1, 4, die keine Information über die Verwendung der Berechtigungsmarke haben, könnten in Gefahr kommen, einen DoS-Angriff nicht zu bemerken, da der Zugangs-Router 6 die Information über die Verwendung der Berechtigungsmarke im Zugangs-Netzwerk nicht weitergegeben hat. Allerdings verursacht die Information über die Verwendung der Berechtigungsmarke an das gesamte Zugangs-Netzwerk sehr viel Signalisierungsverkehr im Zugangs-Netzwerk.

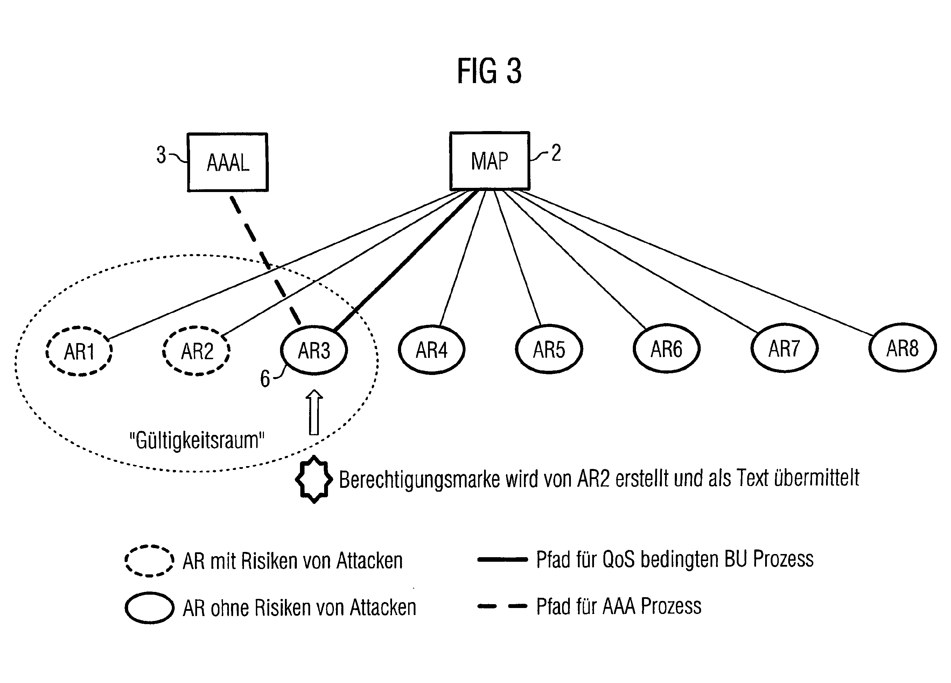

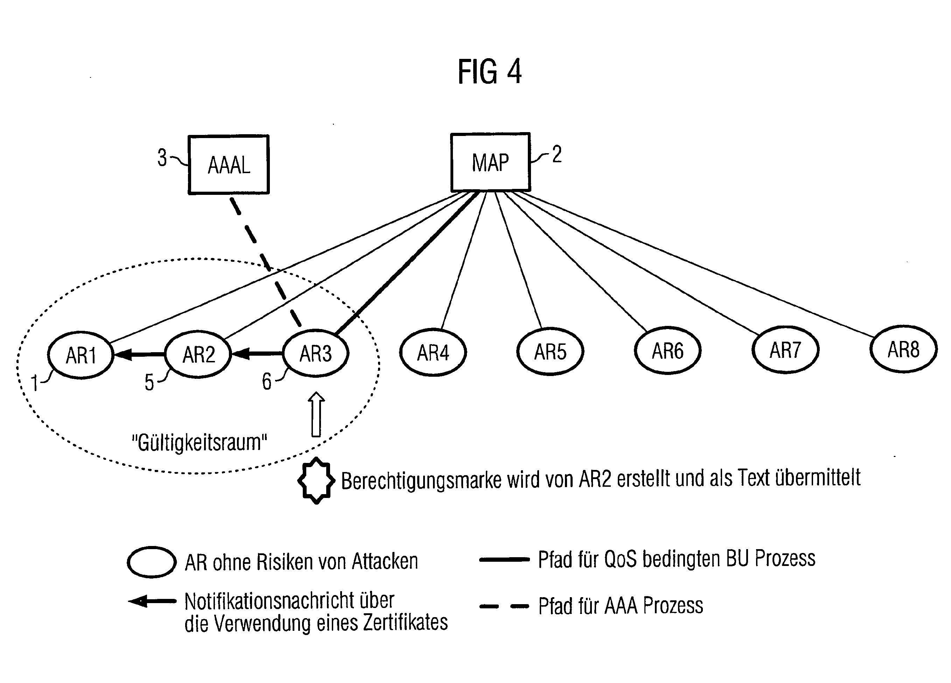

Figur 3 und 4 zeigen, wie jeder Zugangs-Router seine zwei benachbarten Zugangs-Router und sich selbst in mindestens eine Vertrauensliste zur Reduzierung des Gültigkeitsbereichs der Berechtigungsmarke einträgt, z. B. Zugangs-Router 4 trägt die Zugangs-Router 1 und 6 und sich selbst in mindestens eine Vertrauensliste ein. Damit wird die von dem Zugangs-Router erstellte Berechtigungsmarke nur von den Zugangs-Routern 1, 4 und 6 akzeptiert. Der Zugangs-Router 4 besitzt Sicherheits-Assoziationen mit den Zugangs-Routern 1, 6 und jeder Zugangs-Router 4, 1 und 6 hat mindestens eine Vertrauensliste 7 mit Informationen, die angeben, welche Berechtigungsmarken er (4) von welchen Zugangs-Routern 1, 4 und 6 akzeptiert. Das Mobilfunkendgerät 5 erhält eine vom Zugangs-Router 4 erstellte Berechtigungsmarke und sendet sie für einen Intra-Domänen-handover an einen Zugangs-Router 6. Nach erfolgreicher Überprüfung der Berechtigungsmarke kann der Verbindungs-Aktualisierungs- und der AAA-Prozess beginnen. Die Zugangs-Router, die nicht in der Vertrauensliste 7 des Zugangs-Routers 4 enthalten sind (z. B. alle anderen Zugangs-Router außer 1, 4 und 6) sind nicht in Gefahr eine wiederholte Berechtigungsmarke, das schon verwendet wurde, zu erhalten. Der Zugangs-Router 6, der die Berechtigungsmarke verwendet hat, weiß ebenso über die Verwendung Bescheid, d. h. nur noch die Zugangs-Router 1 und 4 sind in Gefahr bei einem etwaigen DoS-Angriff, da sie diese Berechtigungsmarke immer noch akzeptieren würden.

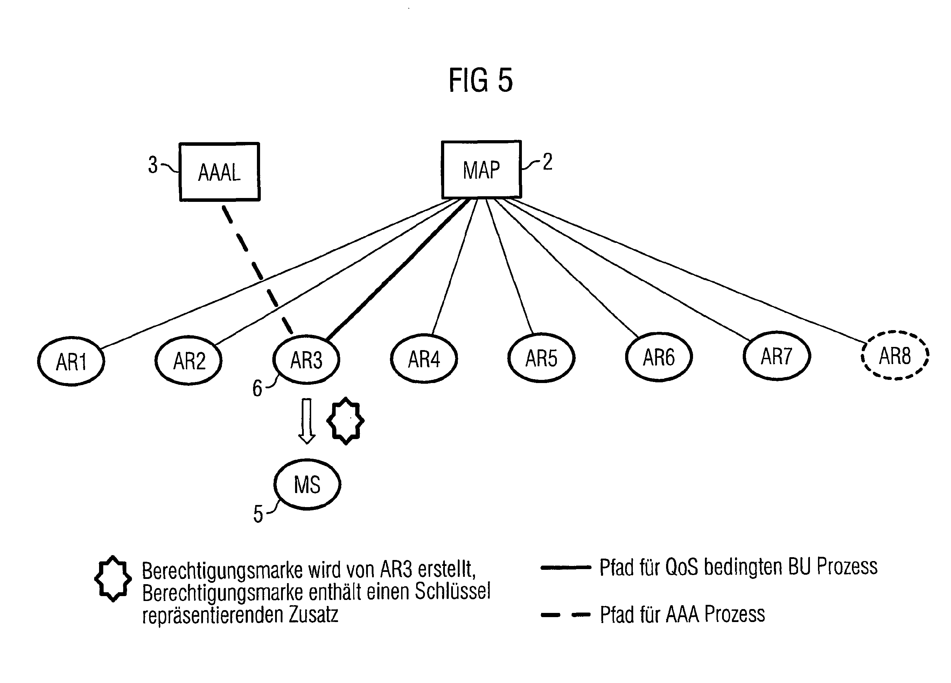

Figur 5 zeigt, wie der Zugangs-Router 6, nachdem er 6 die Berechtigungsmarke akzeptiert hat, eine Information sofort an den Zugangs-Router 4 sendet, der die Berechtigungsmarke erstellt hat. Danach informiert der Zugangs-Router 4 den Zugangs-Router 1 in seiner Vertrauensliste 7 und den Zugangs-Router 6, damit er 6 keine weiteren Kopien der Berechtigungsmarke akzeptiert.
Wenn die Überprüfung der Berechtigungsmarke fehlschlägt, wird der Wieder-Registrierungsprozess nicht gestartet, andernfalls wird gleichzeitig mit dem Verbindungs-Aktualisierungsprozess und dem Wieder-Autorisationsprozess begonnen. Wenn eine Wieder-Registrierungsanfrage (BU ACK - Nachricht) mit dem Sitzungsschlüssel bei dem Zugangs-Router 6 eintrifft, überprüft dieser (6) eine digitale Signatur, die von einem mobilen Knoten über die gesamte Laufzeit der QoS-Anfrage mit dem Sitzungsschlüssel in Bezug auf die Wieder-Authentifikation erstellt wurde. Nach erfolgreicher Überprüfung der Berechtigungsmarke fügt der Zugangs-Router 6 ein mit dem Sitzungsschlüssel verschlüsselte neue Berechtigungsmarke der Wieder-Registrierungsanfrage (BU ACK - Nachricht) hinzu und sendet es an das Mobilfunkendgerät 5.

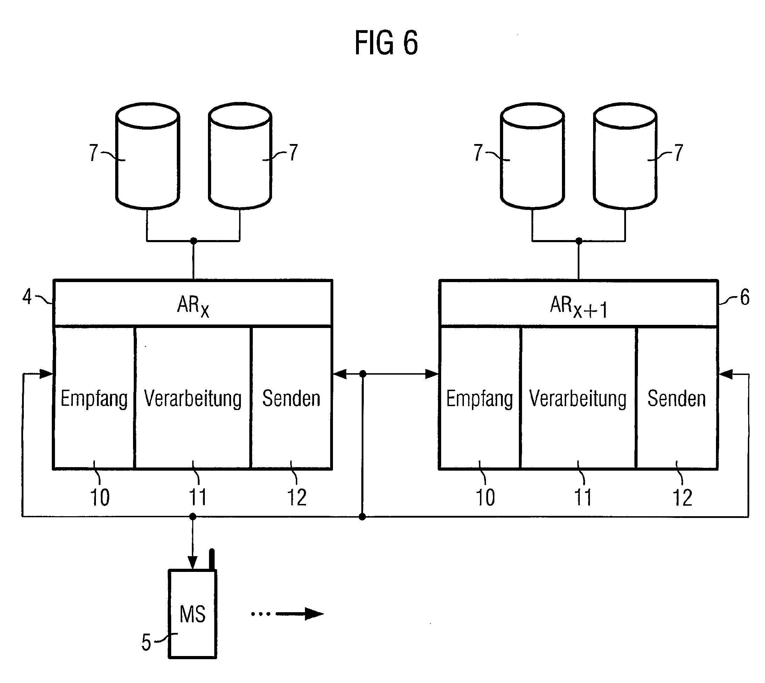

Figur 6 zeigt, wie ein Zugangs-Router 4 eine Berechtigungsmarke mit einer Verarbeitungseinheit 11 erstellt und sie mit einer Sendeeinheit 12 an ein Mobilfunkendgerät sendet. Berechtigungsmarken, die von weiteren Zugangs-Routern 6 erstellt wurden, werden über eine Empfangseinheit 10 zu einer Verarbeitungseinheit 11 weitergeleitet, die sie 11 an eine weitere Vertrauensliste 7 sendet. Jeder Zugangs-Router (4, 6) hat mindestens eine Vertrauensliste. In einer Vertrauensliste 7 (Trusted List) werden Informationen über die Zugangs-Router (1, 6) gespeichert, deren Berechtigungsmarken akzeptiert werden und in einer anderen Vertrauensliste 7 (Trusting List) werden Informationen über die Zugangs-Router (1,6) gespeichert, die die Berechtigungsmarken des erzeugenden Zugangs-Router (4) akzeptieren. In einer dritten Vertrauensliste 7 werden die bereits verwendeten Berechtigungsmarken gespeichert. Hier werden alle Berechtigungsmarken gespeichert, die bereits einmal von einem Mobilfunkendgerät erfolgreich verwendet wurden. Wenn ein Mobilfunkendgerät 5 einen Intra-Domänen-handover durchführen möchte, fügt es (5) die Berechtigungsmarke der Wieder-Registrierungsanfrage hinzu und sendet es (5) als Text zu dem neuen Zugangs-Router 6. Der neue Zugangs-Router 6 erhält die Berechtigungsmarke über eine Empfangseinheit 10 und leitet sie zur Überprüfung an eine Verarbeitungseinheit 11 weiter. Die Verarbeitungseinheit 11 führt drei Aktionen zum Überprüfen der Berechtigungsmarke durch:
- Überprüfung der Gültigkeitsdauer für den Ablaufzeitpunkt der Berechtigungsmarke;
- Überprüfung der Identität des Zugangs-Routers, der die Berechtigungsmarke erstellt hat, in einer Vertrauensliste 7;
- Nach Überprüfung der o. g. Punkte wird ein Zufallszahl-Zusatz (key-hashed digest) mit den Berechtigungsmarken-Informationen unter Verwendung des Berechtigungsmarken-Schlüssels berechnet und mit dem Zufallszahl-Zusatz, der in der Berechtigungsmarke bereits vorhanden ist, verglichen.

Wenn die Überprüfung der Berechtigungsmarke erfolgreich ist, wird der Verbindungs-Aktualisierungs- und Wieder-Autorisationsprozess gestartet. Der neue Zugangs-Router 6 wird die Wieder-Registrierungsanfräge authentifizieren, wenn er den Sitzungsschlüssel, der in der Wieder-Registrierungsanfrage (BU ACK - Nachricht) enthalten ist, vom Mobilitäts-Ankerpunkt (MAP) 2 über eine Empfangseinheit 10 erhält. Wenn die Verifikation fehlschlägt wird der Zugangs-Router 6 die Wieder-Registrierungsanfrage nicht weiter bearbeiten. Hat das Mobilfunkendgerät 5 nach einiger Zeit noch keine Antwort über die Wieder-Registrierung vom Zugangs-Router 6 über eine Sendeeinheit 12 erhalten, muss das Mobilfunkendgerät 5 einen Autorisations- und Authentifikationsprozess über den lokalen AAA-Server 3 und den Heimat-AAA-Server beginnen, so wie bei einem Intra-Domänen-handover oder beim Einschalten des Gerätes 5.

## Patentansprüche

1. Verfahren zum Überprüfen der Einbuchungsberechtigung vor dem Start des Wieder-Registrierungsprozesses aufgrund einer Einbuchungsanfrage eines Mobilfunkendgerätes (5) an mindestens eine Zugangseinrichtung (6) für einen Intra-Domänen-handover in einem mobilen Kommunikationsnetz,
**dadurch gekennzeichnet,**
**dass** eine Berechtigungsmarke, die von einer Zugangseinrichtung (4) an ein Mobilfunkendgerät (5) gesandt wurde und in mindestens einer Vertrauenstabelle (7) von mindestens einer Zugangseinrichtung (4) gespeichert wurde, von mindestens einer weiteren Zugangseinrichtung (1, 4, 6) bei einer Einbuchungsanfrage eines Mobilfunkendgerätes (5) empfangen und mit in mindestens einer Vertrauenstabelle (7) gespeicherten Berechtigungsmarken vor Beginn der Einbuchung zur Einbuchungsberechtigungsprüfung verglichen wird,
nur bei Vorliegen einer Berechtigung die Einbuchung gestartet wird und
**dass** die Berechtigungsmarke mit einem Schlüssel verschlüsselt an ein Mobilfunkendgerät (5) übermittelt wird.

2. Verfahren nach Anspruch 1,
**dadurch gekennzeichnet,**
**dass** die Überprüfung der Einbuchungsberechtigung vor Beginn der Wieder-Registrierungsprozesse geschieht.

3. Verfahren nach einem der vorhergehenden Ansprüche,
**dadurch gekennzeichnet,**
**dass** für den Wieder-Registrierungsprozess der Verbindungs-Aktualisierungsprozess verwendet wird.

4. Verfahren nach einem der vorhergehenden Ansprüche,
**dadurch gekennzeichnet,**
**dass** für den Wieder-Registrierungsprozess der Authentifizierungs- und Autorisierungsprozess verwendet wird.

5. Verfahren nach einem der vorhergehenden Ansprüche,
**dadurch gekennzeichnet,**
**dass** für den Wieder-Registrierungsprozess der Authentifizierungs- und Autorisierungsprozess und der Verbindungs-Aktualisierungsprozess gleichzeitig verwendet werden.

6. Verfahren nach einem der vorhergehenden Ansprüche,
**dadurch gekennzeichnet,**
**dass** eine Zugangseinrichtung (4) ein Zugangs-Router ist.

7. Verfahren nach einem der vorhergehenden Ansprüche,
**dadurch gekennzeichnet,**
**dass** nach erfolgreicher Prüfung der Berechtigung von der Zugangseinrichtung (6) die Erneuerung des Verbindungsprozesses gestartet wird.

8. Verfahren nach einem der vorhergehenden Ansprüche,
**dadurch gekennzeichnet,**
**dass** nach erfolgreicher Prüfung der Berechtigung von der Zugangseinrichtung (6) die Erneuerung des Autorisations- und Authentifikationsprozesses gestartet wird.

9. Verfahren nach einem der vorhergehenden Ansprüche,
**dadurch gekennzeichnet,**
**dass** die Berechtigungsmarke mit der Nachricht zur Erneuerung der Verbindung zwischen Zugangseinrichtung (6) und Mobilfunkendgerät (5) gesandt wird.

10. Verfahren nach einem der vorhergehenden Ansprüche,
**dadurch gekennzeichnet,**
**dass** eine Zugangseinrichtung (4) die von einem Mobilfunkendgerät (5) empfangene Berechtigungsmarke an eine Nachbar-Zugangseinrichtungen (1, 6) versendet.

11. Verfahren nach einem der vorhergehenden Ansprüche,
**dadurch gekennzeichnet,**
**dass** eine Zugangseinrichtung (4) die von einem Mobilfunkendgerät (5) empfangene Berechtigungsmarke an eine Nachbar-Zugangseinrichtungen (1, 6) versendet, die in einer Vertrauensliste gespeichert ist.

12. Verfahren nach einem der vorhergehenden Ansprüche,
**dadurch gekennzeichnet,**
**dass** eine Zugangseinrichtung (4) von Nachbar-Zugangseinrichtungen (1, 6) erhaltene Berechtigungsmarken in mindestens einer Vertrauenstabelle (7) speichert.

13. Verfahren nach einem der vorhergehenden Ansprüche,
**dadurch gekennzeichnet,**
**dass** verwendete Berechtigungsmarken in einer dafür vorgesehenen Vertrauenstabelle gespeichert werden.

14. Verfahren nach einem der vorhergehenden Ansprüche,
**dadurch gekennzeichnet,**
**dass** ein Mobilfunkendgerät (5) bei einem Intra-Domänen-handover die Berechtigungsmarke an eine weitere Zugangseinrichtung (6) sendet.

15. Verfahren nach einem der vorhergehenden Ansprüche,
**dadurch gekennzeichnet,**
**dass** eine weitere Zugangseinrichtung (6) die Berechtigungsmarke nach der Gültigkeitsdauer der Berechtigungsmarke überprüft.

16. Verfahren nach einem der vorhergehenden Ansprüche,
**dadurch gekennzeichnet,**
**dass** eine weitere Zugangseinrichtung (6) die Berechtigungsmarke nach dem Erstellen der Berechtigungsmarke überprüft.

17. Verfahren nach einem der vorhergehenden Ansprüche,
**dadurch gekennzeichnet,**
**dass** ein einen Schlüssel repräsentierender Zusatz der Berechtigungsmarke mit einem berechneten Schlüssel der Zugangseinrichtung (6) verglichen wird.

18. Verfahren nach einem der vorhergehenden Ansprüche,
**dadurch gekennzeichnet,**
**dass** eine Berechtigungsmarke die Identität des Mobilfunkendgerät (5) enthält.

19. Verfahren nach einem der vorhergehenden Ansprüche,
**dadurch gekennzeichnet,**
**dass** eine Berechtigungsmarke die Identität der erstellenden Zugangseinrichtung (4) enthält.

20. Verfahren nach einem der vorhergehenden Ansprüche,
**dadurch gekennzeichnet,**
**dass** eine Berechtigungsmarke die Erstellungszeit enthält.

21. Verfahren nach einem der vorhergehenden Ansprüche,
**dadurch gekennzeichnet,**
**dass** eine Berechtigungsmarke eine Zufallszahl enthält.

22. Verfahren nach einem der vorhergehenden Ansprüche,
**dadurch gekennzeichnet,**
**dass** eine Berechtigungsmarke einen einen Schlüssel repräsentierenden Zusatz enthält.

23. Vorrichtung zum Überprüfen der Zugangsberechtigung beim Starten von Authentifizierungs- und Autorisierungsprozessen aufgrund von einer Einbuchungsanfrage eines Mobilfunkendgerätes (5) an mindestens eine Zugangseinrichtung (4) für einen Intra-Domänen-handover in einem mobilen Kommunikationsnetz,
mit einer Empfangseinheit (10) zum Empfangen einer Berechtigungsmarke und einer Anfrage betreffend die Berechtigung für den Zugang eines Mobilfunkendgerätes,
mit einer Verarbeitungseinheit (11) zum Erstellen von Berechtigungsmarken und zum Überprüfen von erhaltenen Berechtigungsmarken,
mit der Verarbeitungseinheit (11) zum Verschlüsseln der Berechtigungsmarken mit einem Schlüssel,
mit mindestens einer Vertrauenstabelle (7) zum Speichern von erstellten und von mindestens einer Zugangseinrichtung (6) erhaltenen Berechtigungsmarken und
mit einer Sendeeinheit (12) zum Senden von erstellten verschlüsselten Berechtigungsmarken an ein Mobilfunkendgerät (5) und mindestens einer weiteren Zugangseinrichtung (6) und zum Weiterleiten der Zugangsberechtigung an weitere Netzwerkeinheiten.

## Claims

1. Method for verifying the check-in authentication before the start of the re-registration process on the basis of a check-in request from a mobile radio terminal (5) to at least one access device (6) for an intra-domain handover in a mobile communication network,
**characterised in that**
an authentication token sent from an access device (4) to a mobile radio terminal (5) and saved in at least one trusted table (7) of at least one access device (4) is received by at least one further access device (1, 4, 6) in the event of a check-in request from a mobile radio terminal (5) and is compared with authentication tokens stored in at least one trusted table (7) before the start of the check-in for the check-in authentication verification,
the check-in is started only if an authentication is present and
that the authentication token is transmitted in encrypted form with a key to a mobile radio terminal (5).

2. Method according to claim 1,
**characterised in that**
the verification of the check-in authentication takes place before the start of the re-registration processes.

3. Method according to one of the preceding claims,
**characterised in that**
the connection update process is used for the re-registration process.

4. Method according to one of the preceding claims,
**characterised in that**
the authentication and authorisation process is used for the re-registration process.

5. Method according to one of the preceding claims,
**characterised in that**
the authentication and authorisation process and the connection update process are used simultaneously for the re-registration process.

6. Method according to one of the preceding claims,
**characterised in that**
an access device (4) is an access router.

7. Method according to one of the preceding claims,
**characterised in that**
the renewal of the connection process is started after the access device (6) has successfully verified the authentication.

8. Method according to one of the preceding claims,
**characterised in that**
the renewal of the authorisation and authentication process is started after the access device (6) has successfully verified the authentication.

9. Method according to one of the preceding claims,
**characterised in that**
the authentication token is sent with the message to renew the connection between access device (6) and mobile radio terminal (5).

10. Method according to one of the preceding claims,
**characterised in that**
an access device (4) sends the authentication token received from a mobile radio terminal (5) to an adjacent access device (1, 6).

11. Method according to one of the preceding claims,
**characterised in that**
an access device (4) sends the authentication token received from a mobile radio terminal (5) to an adjacent access device (1, 6) which is stored in a trusted list.

12. Method according to one of the preceding claims,
**characterised in that**
an access device (4) stores authentication tokens received from adjacent access devices (1, 6) in at least one trusted table (7).

13. Method according to one of the preceding claims,
**characterised in that**
authentication tokens used are stored in a trusted table provided for this purpose.

14. Method according to one of the preceding claims,
**characterised in that**
a mobile radio terminal (5) sends the authentication token to a further access device (6) in the event of an intra-domain handover.

15. Method according to one of the preceding claims,
**characterised in that**
a further access device (6) verifies the authentication token according to the period of validity of the authentication token.

16. Method according to one of the preceding claims,
**characterised in that**
a further access device (6) verifies the authentication token according to the generation of the authentication token.

17. Method according to one of the preceding claims,
**characterised in that**
an add-on to the authentication token representing a key is compared to a calculated key of the access device (6).

18. Method according to one of the preceding claims,
**characterised in that**
an authentication token contains the identity of the mobile radio terminal (5).

19. Method according to one of the preceding claims,
**characterised in that**
an authentication token contains the identity of the generating access device (4).

20. Method according to one of the preceding claims,
**characterised in that**
an authentication token contains the generation time.

21. Method according to one of the preceding claims,
**characterised in that**
an authentication token contains a random number.

22. Method according to one of the preceding claims,
**characterised in that**
an authentication token contains an add-on representing a key.

23. Device for verifying the access authentication when starting authentication and authorisation processes on the basis of a check-in request from a mobile radio terminal (5) to at least one access device (4) for an intra-domain handover in a mobile communication network,
with a receive unit (10) for receiving an authentication token and a request concerning the authentication for access from a mobile radio terminal,
with a processing unit (11) for generating authentication tokens and for verifying authentication tokens received,
with the processing unit (11) for encrypting the authentication tokens with a key,
with at least one trusted table (7) for storing generated authentication tokens and authentication tokens received from at least one access device (6) and
with a transmit unit (12) for sending generated encrypted authentication tokens to a mobile radio terminal (5) and at least a further access unit (6) and for forwarding the access authentication to other network units.

## Revendications

1. Procédé de vérification de l'autorisation d'enregistrement avant le début du processus de réenregistrement sur la base d'une requête d'enregistrement d'un téléphone mobile (5) auprès d'au moins un dispositif d'accès (6) pour un handover intra-domaine dans un réseau de communication mobile,
**caractérisé en ce que**
un jeton d'autorisation, qui a été envoyé par un dispositif d'accès (4) à un téléphone mobile (5) et qui a été mémorisé dans au moins une table de confiance (7) par au moins un dispositif d'accès (4), est reçu par au moins un autre dispositif d'accès (1, 4, 6) lors d'une requête d'enregistrement d'un téléphone mobile (5) et est comparé à des jetons d'autorisation, mémorisés dans au moins une table de confiance (7), avant le début de l'enregistrement afin de vérifier l'autorisation de l'enregistrement, l'enregistrement n'étant lancé qu'en cas d'autorisation et
le jeton d'autorisation est transmis à un téléphone mobile (5) en étant chiffré avec une clé.

2. Procédé selon la revendication 1, **caractérisé en ce que** la vérification de l'autorisation d'enregistrement est effectuée avant le début des processus de réenregistrement.

3. Procédé selon l'une des revendications précédentes, **caractérisé en ce que** le processus d'actualisation des liaisons est utilisé pour le processus de réenregistrement.

4. Procédé selon l'une des revendications précédentes, **caractérisé en ce que** le processus d'authentification et d'autorisation est utilisé pour le processus de réenregistrement.

5. Procédé selon l'une des revendications précédentes, **caractérisé en ce que** le processus d'authentification et d'autorisation et le processus d'actualisation des liaisons sont utilisés simultanément pour le processus de réenregistrement.

6. Procédé selon l'une des revendications précédentes, **caractérisé en ce qu'**un dispositif d'accès (4) est un routeur d'accès.

7. Procédé selon l'une des revendications précédentes, **caractérisé en ce que** le renouvellement du processus de liaison est lancé après une vérification réussie de l'autorisation par le dispositif d'accès (6).

8. Procédé selon l'une des revendications précédentes, **caractérisé en ce que** le renouvellement du processus d'authentification et d'autorisation est lancé après une vérification réussie de l'autorisation par le dispositif d'accès (6).

9. Procédé selon l'une des revendications précédentes, **caractérisé en ce que** le jeton d'autorisation est envoyé avec le message de renouvellement de la liaison entre le dispositif d'accès (6) et le téléphone mobile (5).

10. Procédé selon l'une des revendications précédentes, **caractérisé en ce qu'**un dispositif d'accès (4) envoie le jeton d'autorisation, reçu par un téléphone mobile (5), à un dispositif d'accès voisin (1, 6).

11. Procédé selon l'une des revendications précédentes, **caractérisé en ce qu'**un dispositif d'accès (4) envoie le jeton d'autorisation, reçu par un téléphone mobile (5), à un dispositif d'accès voisin (1, 6) qui est mémorisé dans une liste de confiance.

12. Procédé selon l'une des revendications précédentes, **caractérisé en ce qu'**un dispositif d'accès (4) mémorise des jetons d'autorisation, obtenus de dispositif d'accès voisins (1, 6), dans au moins une table de confiance (7).

13. Procédé selon l'une des revendications précédentes, **caractérisée en ce que** les jetons d'autorisation utilisés sont mémorisés dans une table de confiance qui leur est destinée.

14. Procédé selon l'une des revendications précédentes, **caractérisé en ce qu'**un téléphone mobile (5) envoie le jeton d'autorisation à un autre dispositif d'accès (6) lors d'un handover intra-domaine.

15. Procédé selon l'une des revendications précédentes, **caractérisé en ce qu'**un autre dispositif d'accès (6) vérifie le jeton d'autorisation après une durée de validité du jeton d'autorisation.

16. Procédé selon l'une des revendications précédentes, **caractérisé en ce qu'**un autre dispositif d'accès (6) vérifie le jeton d'autorisation après la génération du jeton d'autorisation.

17. Procédé selon l'une des revendications précédentes, **caractérisé en ce qu'**un supplément au jeton d'autorisation, lequel supplément représente une clé, est comparé à une clé calculée du dispositif d'accès (6).

18. Procédé selon l'une des revendications précédentes, **caractérisé en ce qu'**un jeton d'autorisation comporte l'identité du téléphone mobile (5).

19. Procédé selon l'une des revendications précédentes, **caractérisé en ce qu'**un jeton d'autorisation comporte l'identité du dispositif d'accès (4) qui génère le jeton d'autorisation.

20. Procédé selon l'une des revendications précédentes, **caractérisé en ce qu'**un jeton d'autorisation comporte le temps de génération.

21. Procédé selon l'une des revendications précédentes, **caractérisé en ce qu'**un jeton d'autorisation comporte un nombre aléatoire.

22. Procédé selon l'une des revendications précédentes, **caractérisé en ce qu'**un jeton d'autorisation comporte un supplément représentant une clé.

23. Dispositif de vérification de l'autorisation d'accès lors du lancement de processus d'authentification et d'autorisation à la suite d'une requête d'enregistrement d'un téléphone mobile (5) auprès d'au moins un dispositif d'accès (4) pour un handover intra-domaine dans un réseau de communication mobile, le dispositif comprenant
une unité de réception (10) destinée à recevoir un jeton d'autorisation et une requête concernant l'autorisation d'accès d'un téléphone mobile,
une unité de traitement (11) destinée à générer des jetons d'autorisation et à vérifier des jetons d'autorisation obtenus,
l'unité de traitement (11) étant destinée à chiffrer les jetons d'autorisation avec une clé,
au moins une table de confiance (7) destinée à mémoriser des jetons d'autorisation générés et des jetons d'autorisation obtenus d'au moins un dispositif d'accès (6) et
une unité d'émission (12) destinée à envoyer des jetons d'autorisation générés chiffrés à un téléphone mobile (5) et au moins un autre dispositif d'accès (6) et à transmettre l'autorisation d'accès à d'autres unités du réseau.
